# EUROPÄISCHE PATENTSCHRIFT

(11) **EP 1 443 306 B1**
(45) Veröffentlichungstag und Bekanntmachung des Hinweises auf die Patenterteilung: **21.09.2016**
(21) Anmeldenummer: 03104096.7
(22) Anmeldetag: 06.11.2003
(51) Int. Cl.: G01C 21/26

(54) **System und Verfahren zur Bereitstellung ortsabhängiger Daten für prädiktive Informations- und Assistenzsysteme in einem Fahrzeug**
System and method for providing location dependent data for predictive information and assistance systems in a vehicle
Système et procédé pour fournir des données en fonction de position pour des systèmes d'information prédictives et d'assistance dans un véhicule

(30) Priorität: 31.01.2003 DE 10303791
(43) Veröffentlichungstag der Anmeldung: 04.08.2004
(73) Patentinhaber: ROBERT BOSCH GMBH, 70442 Stuttgart (DE)
(72) Erfinder: Neukirchner, Ernst-Peter, 31139, Hildesheim (DE)

(56) Entgegenhaltungen:
- EP-A2- 1 049 051
- EP-A2- 1 111 338
- DE-A1- 19 730 319
- DE-A1- 19 839 354
- DE-A1- 19 931 161

## Beschreibung

Die Erfindung betrifft ein System und Verfahren zur Bereitstellung ortsabhängiger Daten für prädiktive Informations- und Assistenzsysteme in einem Fahrzeug gemäß den unabhängigen Ansprüchen 1 und 5.

Aus der EP 1 111 338 A2 ist ein Verfahren zur Bereitstellung von Daten bekannt, die Pfade bezeichnen, die ein Fahrzeug von der gegenwärtigen Position aus einschlagen kann. Dabei wird die gegenwärtige Fahrzeugposition bestimmt, Pfade ausgerechnet und diese gespeichert. Von einer digitalen Kartendatenbank und einem Positionsbestimmungssystem werden über einen Datenverteiler zur Verfügung stehende Daten an Empfänger von Fahrerassistenzsystemen gesendet. Alle Fahrerassistenzsysteme erhalten die gleiche Nachricht über das Vorhandensein einer bestimmten Information und können diese abfragen.

Nachteilig an einem solchen Verfahren bzw. an einer solchen Architektur ist die Tatsache, dass alle Assistenzsysteme mit allen Informationsangeboten in gleichen Zeitabständen versorgt werden, auch wenn diese Daten für einen Großteil der Assistenzsysteme nicht relevant sind und/oder weniger häufig benötigt werden. Es werden daher große Datenmengen innerhalb des Systems bewegt, ohne das dies notwendig wäre.

Aufgabe der Erfindung ist es, ein System und ein Verfahren bereitzustellen, bei dem die übertragene Datenmenge gering gehalten wird und mit dem verschiedene, gegebenenfalls gleichzeitig betriebene Informations- und Assistenzsysteme mit den jeweils von Ihnen benötigten Informationen versorgt werden.

Erfindungsgemäß wird diese Aufgabe dadurch gelöst, dass das Informations- oder Assistenzsystem unmittelbar bidirektional mit der Kommunikationseinrichtung verbunden ist, so dass die prädiktiven Informations- oder Assistenzsysteme die zu übermittelnden Daten über die Kommunikationseinrichtung von dem Abfragesystem nach Art und oder Umfang anfordern können. Dadurch wird vermieden, dass nicht benötigte Daten transportiert werden, und es wird ermöglicht, dass Daten zwischen Anwendungen über eine Kommunikationseinrichtung ausgetauscht werden können, so dass Daten, die über die heutigen Inhalte einer digitalen Karte weit hinausgehen, für eine oder mehrere Anwendungen in prädiktiven Informations- oder Assistenzsysteme verfügbar gemacht werden können.

Eine Weiterbildung der Erfindung sieht vor, dass die Positionsbestimmungseinrichtung ein Teil eines Navigationssystems ist, so dass bestehende Navigationssysteme in ihrer Funktion mitgenutzt und nicht beeinträchtigt werden. Auf diese Weise ist eine gemeinsame Datenbasis für alle Anwendungen realisierbar.

Die Kommunikationseinrichtung kann als ein Bussystem oder ein Kommunikationsinterface ausgebildet sein, das die Positionsbestimmungseinrichtung mit verschiedenen Anwendungen des prädiktiven Informations- oder Assistenzsystems verbindet.

Vorteilhafterweise sind in dem Abfragesystem Informationen über Inhalt und Genauigkeit der Kartendatenbank enthalten, so dass jedes Informations- oder Assistenzsystem darüber informiert ist, ob und in welcher Genauigkeit Daten, wie z.B. eine Steigung in einem Straßenabschnitt, der Krümmungsradius einer in der Nähe liegenden Kurve oder der Zustand des Straßenbelages, abgelegt sind.

Vorteilhafterweise werden von der Positionsbestimmungseinrichtung zyklisch Informationen über die gegenwärtige Position und den Verlauf der voraussichtlichen Fahrroute an das Abfragesystem und oder zumindest ein prädiktives Informations- oder Assistenzsystem gesendet. Diese kann dann unabhängig von anderen Systemen entscheiden, ob die bisher empfangenen Daten ausreichend sind oder ob es erneut Daten anfordern muss. Ist beispielsweise von der Positionsbestimmungseinrichtung die Information übermittelt worden, dass sich das Fahrzeug einer Kurve nähert, kann das Assistenzsystem zur Nachführung von Scheinwerfern den Krümmungsradius der Kurve abfragen, um dadurch vorausschauend die Ausrichtung der Scheinwerfer an den Straßenverlauf anzupassen.

Um den zu übertragenden Datenaufwand möglichst gering zu halten, fragen die prädiktiven Informations- oder Assistenzsystem die zu übermittelnden Daten von der Kommunikationseinrichtung unabhängig voneinander ab, so dass nicht alle Daten an alle Empfänger gesendet werden, sondern eine bedarfsgerechte Übermittlung von Daten an jedes Informations- oder Assistenzsystem erfolgt. Jede Anwendung teilt also dem Abfragesystem über die Kommunikationseinrichtung mit, welche Daten in welcher Qualität benötigt werden und erhält genau diese Daten, sofern sie verfügbar sind. Fordern mehrere prädiktive Informations- oder Assistenzsysteme gleiche Daten zur gleichen Zeit an, so können diese vom Abfragesystem einmal und gleichzeitig an die anfordernden Systeme gesendet werden.

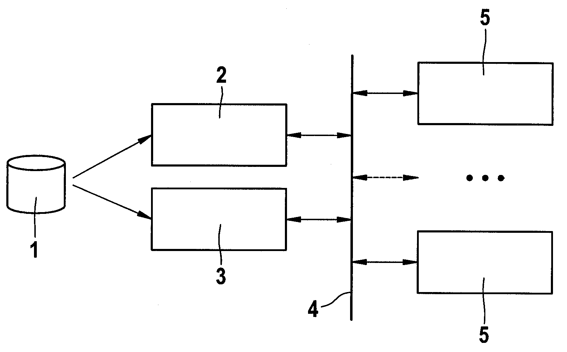

Nachfolgend wird anhand der einzigen Figur ein Ausführungsbeispiel der Erfindung erläutert. Die Figur zeigt ein Blockschaltbild des Systems.

Das System besteht aus einer digitalen Kartendatenbank 1 in Gestalt einer Speichervorrichtung, die mit einer Einrichtung 2 zur Bestimmung der Position des Fahrzeuges oder einer Navigationseinrichtung und einem Abfragesystem 3 für die Kartendatenbank 1 verbunden ist. Eine Kommunikationseinrichtung 4, beispielsweise ein Bussystem oder Kommunikationsinterface, stellt die Verbindung zwischen der Positionsbestimmungseinrichtung 2 und dem Abfragesystem 3 mit zumindest einem System 5 her, das positionsbezogene Daten aus der digitalen Kartendatenbank 1 benötigt und für prädiktive Informations- oder Assistenzfunktionen verwendet.

In der digitalen Kartendatenbank 1 ist eine digitale Karte abgelegt, in der Straßenabschnitte als gerichtete Einheiten beschrieben sind, die von einem Anfangs- zu einem Endpunkt führen. Die Positionsbestimmungseinrichtung 2 oder Navigationseinrichtung ist mit der Kommunikationseinrichtung 4 verbunden, das im Fahrzeug verteilte Informations- oder Assistenzsysteme miteinander oder mit dem Abfragesystem 3 verbindet. Alternativ dazu ist ein Kommunikationsinterface zwischen verschiedenen Anwendungen oder einer Kombination aus Bussystem und Kommunikationsinterface vorhanden.

Die Positionsbestimmungseinrichtung 2 sendet über die Kommunikationseinrichtung 4 Informationen zyklisch oder nach Anforderung an eine oder mehrere Komponenten des Gesamtsystems, wobei diese Informationen beispielsweise die Fahrzeugposition in Form von Koordinaten auf der Erdoberfläche wie Längen- und Breitengrad umfassen können. Weiterhin können Statusinformationen über die Sensorik der Positionsbestimmung oder eine eindeutige Identifikation beispielsweise über eine Identifikationsnummer eines Straßenabschnittes aus der digitalen Karte enthalten, auf dem sich das Fahrzeug mit größter Wahrscheinlichkeit befindet. Weiterhin kann die Entfernung des Fahrzeuges vom Anfangs- oder Endpunkt des gegenwärtig befahrenen Straßenabschnittes oder einem sonstigen, eindeutig definierten Punkt auf dem befahrenen Abschnitt enthalten. Schließlich kann die Information eine Zeitinformation bezüglich des Zeitpunktes der Positionserfassung, eine Statusinformation über die Bestimmung der Position innerhalb des Straßennetzes der digitalen Karte oder die eindeutige Identifikation weiterer Straßenabschnitte enthalten, auf denen sich das Fahrzeug befinden könnte.

Das Navigationssystem, das die Positionsbestimmungseinrichtung 2 beinhaltet, kann in einem durch die digitale Karte repräsentierten Straßennetz Fahrrouten berechnen, und diese Routen können als Folge von zu durchfahrenden Straßenabschnitten gespeichert werden.

Das Navigationssystem bzw. die Positionsbestimmungseinrichtung 2 liefert auf Anforderung die Identifikationen der, ausgehend von der jeweiligen Fahrzeugposition, nächsten auf einer berechneten Route liegenden Straßnabschnitte, sofern eine Route berechnet wurde. Die Anzahl der Straßenabschnitte oder die durch diese abgedeckte Entfernung kann über eine Anfrage spezifiziert werden. Die prädiktiven Informations- oder Assistenzsysteme 5 können über die Kommunikationseinrichtung 4 und das Abfragesystem 3 abfragen, welche Inhalte mit welcher Genauigkeit in der Kartendatenbank 1 verfügbar sind, wobei die Inhalte nicht für alle Straßenabschnitte verfügbar sein müssen. Bei Nichtverfügbarkeit einer Information für einen bestimmten Straßenabschnitt ist dies entsprechend vermerkt.

Jedes prädiktive Informations- oder Assistenzsystem 5 kann die jeweils für seine Anwendung benötigten Daten aus dem Vorrat der verfügbaren Daten auswählen. Die Abfrage kann für jeden Straßenabschnitt über dessen eindeutige Identifikation bei dem Kartenabfragesystem 3 angefordert werden. Die Identifikation für den Abschnitt, auf dem sich das Fahrzeug befindet, kann aus den Informationen der Positionsbestimmungseinrichtung 2 des Navigationssystems entnommen werden.

Zu jedem Straßenabschnitt können die Identifikationen derjenigen Straßenabschnitte abgefragt werden, die am Anfang und/oder am Ende mit diesem verbunden sind. Auf diese Weise kann sich ein prädiktives Informations- oder Assistenzsystem 5 mit einem Netz mit einer Ausdehnung gemäß eigener Anforderung aufbauen, so dass eine Selbstkonfiguration aller Komponenten des Gesamtsystems möglich ist. Dadurch werden vorhandene Ressourcen optimal ausgenutzt, indem die Anwendungen oder Informations- oder Assistenzsysteme 5 Anfragen an das Abfragesystem 3 richten können. Die prädiktiven Informations- oder Assistenzsysteme 5 können die von ihnen benötigten Daten dem Umfang nach individuell und unabhängig voneinander auswählen, wobei der Inhalt und der Umfang bzw. der Vorausschaubereich durch die Systeme 5 bzw. die Anwendungen individuell festgelegt werden.

Zukünftige Automobile werden den Fahrer über voraus liegende Gefahrenstellen informieren und ihn bei der Fahraufgabe durch Hinweise und ggf. aktive Eingriffe unterstützen. Nicht alle hierfür notwendigen Informationen können über eine Sensorik wie Radar oder Kamera in ausreichendem Umfang erfasst werden. Es ist daher sinnvoll Daten, die aus einer digitalen Karte entnehmbar sind, für solche Anwendungen verfügbar zumachen. Die Inhalte der digitalen Karte müssen für einige Anwendungen über den bestehenden Umfang für Navigation erweitert werden, wobei darauf zu achten ist, dass diese Erweiterungen bestehende Navigationssysteme in ihrer Funktion nicht beeinträchtigen, so dass einen gemeinsame Datenbasis für alle Anwendungen realisierbar ist. Die Informationen über die Fahrzeugposition können nicht nur Koordinaten enthalten, sondern auch die Identifikation eines Straßenabschnittes aus der digitalen Karte, wenn das Fahrzeug sich auf einem solchen Straßenabschnitt befindet.

Karten- und positionsbezogene Daten können über das System und das Verfahren auch von anderen Anwendungen als der Navigation abgefragt werden, ohne dass grundsätzliche Änderungen bestehender Navigationssoftware erforderlich wären. Der Datenumfang für solche Anwendungen kann weit über denjenigen hinausgehen, der gegenwärtig für die Navigation verfügbar ist.

## Patentansprüche

1. System zur Bereitstellung ortsabhängiger Daten für prädiktive Informations- oder Assistenzsysteme (5) in einem Fahrzeug mit einer digitalen Kartendatenbank (1), einer Einrichtung (2) zur Bestimmung der Position des Fahrzeuges und mit einem Abfragesystem (3) für die Kartendatenbank (1), wobei eine Kommunikationseinrichtung (4) die Positionsbestimmungseinrichtung (2) und das Abfragesystem (3) mit zumindest einem prädiktiven Informations- oder Assistenzsystem (5) verbindet, wobei das prädiktive Informations- oder Assistenzsystem (5) unmittelbar bidirektional mit der Kommunikationseinrichtung (4) verbunden ist und wobei das Abfragesystem (3) dazu ausgebildet ist, von mehreren prädiktiven Informations- oder Assistenzsystemen (5) gleichzeitig angeforderte, gleichartige Daten nur einmal und gleichzeitig an die anfordernden Systeme (5) zu senden

2. System nach Anspruch 1, **dadurch gekennzeichnet, dass** die Positionsbestimmungseinrichtung (2) Teil eines Navigationssystems ist.

3. System nach Anspruch 1 oder 2, **dadurch gekennzeichnet, dass** die Kommunikationseinrichtung (4) als ein Bus-System, das verteilte, prädiktive Informations- oder Assistenzsysteme (5) im Fahrzeug mit der Positionsbestimmungseinrichtung (2) verbindet, und/oder ein Kommunikationsinterface, das die Positionsbestimmungseinrichtung (2) mit verschiedenen Anwendungen eines prädiktiven Informations- oder Assistenzsystems (5) verbindet, ausgebildet ist.

4. System nach einem der voranstehenden Ansprüche, **dadurch gekennzeichnet, dass** in dem Abfragesystem (3) Informationen über Inhalte und Genauigkeit der Kartendatenbank (1) enthalten sind.

5. Verfahren zur Bereitstellung ortsabhängiger Daten für prädiktive Informations- oder Assistenzsysteme (5) in einem Fahrzeug, bei dem Daten einer digitalen Kartendatenbank (1) an eine Einrichtung (2) zur Bestimmung der Position des Fahrzeuges und an ein Abfragesystem (3) für die Kartendatenbank (1) übermittelt werden, wobei eine Kommunikationseinrichtung (4) die Positionsbestimmungseinrichtung (2) und das Abfragesystem (3) mit zumindest einem prädiktiven Informations- oder Assistenzsystem (5) verbindet, wobei die prädiktiven Informations- oder Assistenzsysteme (5) die zu übermittelnden Daten über die Kommunikationseinrichtung (4) von dem Abfragesystem (3) nach Art und/oder Umfang anfordern und wobei das Abfragesystem (3) von mehreren prädiktiven Informations- oder Assistenzsystemen (5) gleichzeitig angeforderte, gleichartige Daten nur einmal und gleichzeitig an die anfordernden Systeme (5) sendet.

6. Verfahren nach Anspruch 5, **dadurch gekennzeichnet, dass** die Positionsbestimmungseinrichtung (2) zyklisch Informationen an das Abfragesystem (3) und/oder zumindest ein prädiktives Informations- oder Assistenzsystem (5) sendet.

7. Verfahren nach Anspruch 5 oder 6, **dadurch gekennzeichnet, dass** die prädiktiven Informations- oder Assistenzsysteme (5) die zu übermittelnden Daten von der Kommunikationseinrichtung (4) unabhängig voneinander abfragen

8. Verfahren nach einem der Ansprüche 5 bis 7, **dadurch gekennzeichnet, dass** die prädiktiven Informations- oder Assistenzsysteme (5) das Abfragesystem (3) über den Inhalt oder die Genauigkeit der Kartendatenbank (1) befragen.

## Claims

1. System for providing location-dependent data for predictive information or assistance systems (5) in a vehicle, having a digital map database (1), a device (2) for determining the position of the vehicle and a query system (3) for the map database (1), a communication device (4) connecting the position determination device (2) and the query system (3) to at least one predictive information or assistance system (5), the predictive information or assistance system (5) being directly connected to the communication device (4) in a bidirectional manner, and the query system (3) being designed to transmit identical data simultaneously requested from a plurality of predictive information or assistance systems (5) to the requesting systems (5) only once and at the same time.

2. System according to Claim 1, **characterized in that** the position determination device (2) is part of a navigation system.

3. System according to Claim 1 or 2, **characterized in that** the communication device (4) is in the form of a bus system, which connects distributed predictive information or assistance systems (5) in the vehicle to the position determination device (2), and/or a communication interface, which connects the position determination device (2) to different applications of a predictive information or assistance system (5).

4. System according to one of the preceding claims, **characterized in that** the query system (3) contains information relating to contents and accuracy of the map database (1).

5. Method for providing location-dependent data for predictive information or assistance systems (5) in a vehicle, in which data from a digital map database (1) are transmitted to a device (2) for determining the position of the vehicle and to a query system (3) for the map database (1), a communication device (4) connecting the position determination device (2) and the query system (3) to at least one predictive information or assistance system (5), the predictive information or assistance systems (5) requesting the data to be transmitted from the query system (3) according to type and/or scope via the communication device (4), and the query system (3) transmitting identical data simultaneously requested from a plurality of predictive information or assistance systems (5) to the requesting systems (5) only once and at the same time.

6. Method according to Claim 5, **characterized in that** the position determination device (2) cyclically transmits information to the query system (3) and/or at least one predictive information or assistance system (5).

7. Method according to Claim 5 or 6, **characterized in that** the predictive information or assistance systems (5) query the data to be transmitted from the communication device (4) independently of one another.

8. Method according to one of Claims 5 to 7, **characterized in that** the predictive information or assistance systems (5) query the query system (3) with-regard to the contents or the accuracy of the map database (1).

## Revendications

1. Système de mise à disposition de données dépendantes du lieu pour des systèmes prédictifs d'information ou d'assistance (5) dans un véhicule comprenant une base de données cartographique (1) numérique, un dispositif (2) de détermination de la position du véhicule et comprenant un système d'interrogation (3) de la base de données cartographique (1), un dispositif de communication (4) reliant le dispositif (2) de détermination de la position et le système d'interrogation (3) à au moins un système prédictif d'information ou d'assistance (5), le système prédictif d'information ou d'assistance (5) étant relié directement de manière bidirectionnelle au dispositif de communication (4) et le système d'interrogation (3) étant configuré pour envoyer des données similaires, demandées simultanément par plusieurs systèmes prédictifs d'information ou d'assistance (5), une seule fois et simultanément aux systèmes (5) demandeurs.

2. Système selon la revendication 1, **caractérisé en ce que** le dispositif (2) de détermination de la position fait partie d'un système de navigation.

3. Système selon la revendication 1 ou 2, **caractérisé en ce que** le dispositif de communication (4) est réalisé sous la forme d'un système de bus, qui relie les systèmes prédictifs d'information ou d'assistance (5) distribués dans le véhicule au dispositif (2) de détermination de la position, et/ou d'une interface de communication qui relie le dispositif (2) de détermination de la position à différentes applications d'un système prédictif d'information ou d'assistance (5).

4. Système selon l'une des revendications précédentes, **caractérisé en ce que** le système d'interrogation (3) contient des informations à propos du contenu et de la précision de la base de données cartographique (1).

5. Procédé de mise à disposition de données dépendantes du lieu pour des systèmes prédictifs d'information ou d'assistance (5) dans un véhicule, dans lequel les données d'une base de données cartographique (1) numérique sont communiquées à un dispositif (2) de détermination de la position du véhicule et à un système d'interrogation (3) de la base de données cartographique (1), un dispositif de communication (4) reliant le dispositif (2) de détermination de la position et le système d'interrogation (3) à au moins un système prédictif d'information ou d'assistance (5), les systèmes prédictifs d'information ou d'assistance (5) demandant les données à communiquer par le biais du dispositif de communication (4) auprès du système d'interrogation (3) en fonction de la nature et/ou de l'étendue et le système d'interrogation (3) envoyant des données similaires, demandées simultanément par plusieurs systèmes prédictifs d'information ou d'assistance (5), une seule fois et simultanément aux systèmes (5) demandeurs.

6. Procédé selon la revendication 5, **caractérisé en ce que** le dispositif (2) de détermination de la position envoie de manière cyclique des informations au système d'interrogation (3) et/ou à au moins un système prédictif d'information ou d'assistance (5).

7. Procédé selon la revendication 5 ou 6, **caractérisé en ce que** les systèmes prédictifs d'information ou d'assistance (5) interrogent les données à communiquer par le dispositif de communication (4) indépendamment les uns des autres.

8. Système selon l'une des revendications 5 à 7, **caractérisé en ce que** les systèmes prédictifs d'information ou d'assistance (5) interrogent le système d'interrogation (3) à propos du contenu ou de la précision de la base de données cartographique (1).
